# EUROPEAN PATENT APPLICATION

(11) **EP 4 518 129 A1**
(43) Date of publication of application: **05.03.2025**
(21) Application number: 23194369.7
(22) Date of filing: 30.08.2023
(51) Int. Cl.: H02M 3/335, H02M 1/32, H02M 1/36

(54) **A HALF-BRIDGE CIRCUIT**

(71) Applicant: NXP USA, Inc., Austin TX 78735 (US)
(72) Inventor: DEGEN, Peter Theodorus Johannes, 5656 AG Eindhoven (NL); GRAKIST, Alfred, 5656 AG Eindhoven (NL); LANGESLAG, Wilhelmus Hinderikus Maria, 5656 AG Eindhoven (NL)
(74) Representative: Hardingham, Christopher Mark

(57) **Abstract**

A half-bridge circuit comprising an energy storage component configured to store a charge thereon; a first switch; a second switch; a control circuit configured to control the switching of the first switch and the second switch, wherein the control circuit comprises: a power dissipating component; a discharge switch configured to selectively couple a first node of the power dissipating component to an intermediate node and wherein a second node of the power dissipating component is coupled such that the energy storage component can selectively discharge charge stored thereon via the power dissipating component of the control circuit and wherein the control circuit is further configured to detect when the voltage at the energy storage component is below a predetermined discharge voltage.

## Description

### Field

The present disclosure relates to a half-bridge circuit and a switch mode power supply comprising such a half-bridge circuit.

### Summary

According to a first aspect of the present disclosure, there is provided a half-bridge circuit comprising: a power supply node couplable to a supply voltage; an energy storage component configured to store a charge thereon; a first switch connected: at a first node of the first switch to the power supply node; and at a second node of the first switch to a first node of the energy storage component, wherein a second node of the energy storage component is connected to a first reference node; a second switch connected: at a first node of the second switch to the second node of the first switch; at the first node of the second switch to the first node of the energy storage component; and at a second node of the second switch to a second reference node; a control circuit configured to control the switching of the first switch and the second switch, wherein the control circuit is further connected at an intermediate node of the control circuit to: the second node of the first switch; the first node of the second switch; and the first node of the energy storage component, wherein the control circuit comprises: a power dissipating component; a discharge switch configured to selectively couple a first node of the power dissipating component to the intermediate node and wherein a second node of the power dissipating component is coupled to a third reference node such that the energy storage component can selectively discharge charge stored thereon via the power dissipating component of the control circuit and wherein the control circuit is further configured to detect when the voltage at the energy storage component is below a predetermined discharge voltage.

In one or more embodiments, the control circuit may be configured to cause the energy storage component to be discharged after a reset of the half-bridge circuit.

In one or more embodiments, the reset of the half-bridge circuit may comprise one or more of: disconnection of a load from the half-bridge circuit; operation of the half-bridge circuit in a protection mode; setting an output voltage level of the half-bridge circuit to a lower voltage level; restart of the half-bridge circuit.

In one or more embodiments, the power dissipating component may be a current source.

In one or more embodiments, the control circuit may comprise a comparator configured to compare a voltage at a first input node to a reference voltage at a second input node of the comparator wherein the reference voltage is the predetermined discharge voltage and wherein the voltage at the first input node is indicative of the voltage at the first node of the energy storage component.

In one or more embodiments, the energy storage component may be a resonant capacitor.

In one or more embodiments, the half-bridge circuit may further comprise a transformer comprising a first node of a first winding coupled to: the second node of the first switch; the first node of the second switch; and the intermediate node, and the transformer further comprising a second node coupled to the first node of the energy storage component such that the transformer is arranged between the first switch and the energy storage component.

In one or more embodiments, a second winding of the transformer may be coupled to a load.

In one or more embodiments, the half-bridge circuit may further comprise an inductor arranged between the first switch and the transformer.

In one or more embodiments, the half-bridge circuit may further comprise a voltage limiting component arranged between the discharge switch and the intermediate node wherein the voltage limiting component is configured to limit the power provided from the energy storage component to both the discharge switch and the power dissipating component.

In one or more embodiments, the voltage limiting component may be one of a NMOS or a JFET.

In one or more embodiments, the intermediate node may be coupled to the control circuit at a high-voltage pin of the control circuit.

In one or more embodiments, an output node of the comparator may be coupled to a low-voltage pin of the control circuit.

In one or more embodiments, the control circuit may be configured to prevent start-up of the half-bridge circuit if voltage at the energy storage component is greater than the predetermined discharge voltage.

In one or more embodiments, the control circuit may be configured to prevent start-up of the half-bridge circuit if the voltage at the energy storage component is greater than the predetermined discharge voltage.

According to a second aspect of the present disclosure, there is provided a switch mode power supply comprising the half-bridge circuit of the first aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a half-bridge circuit of the present disclosure; and
Figure 2 shows a switch mode power supply comprising a half-bridge circuit of the present disclosure.

### Detailed Description

Switch mode power supplies are widely used to convert the mains voltage into a lower voltage which is appropriate for the application. For example, a switch mode power supply can be used to provide power to any of a mobile phone, a laptop, a tablet computer or another electronic device. Since each device has a different required power level, it is necessary to be able to provide a power supply which can switch to the required power for a given device within a reliable and short time period in a manner that is safe and avoids damaging a charging device.

The present disclosure presents a circuit having a half-bridge topology that can be used to achieve one or more of the above-listed desired goals. In broad terms, a half-bridge topology uses a set of controlled switches to control how an energy storage device, such as a capacitor, stores and discharges energy. Such a half-bridge circuit can be used in a switch mode power supply which can be used in televisions, gaming consoles, laptops, electric bicycle battery chargers, printers and other devices.

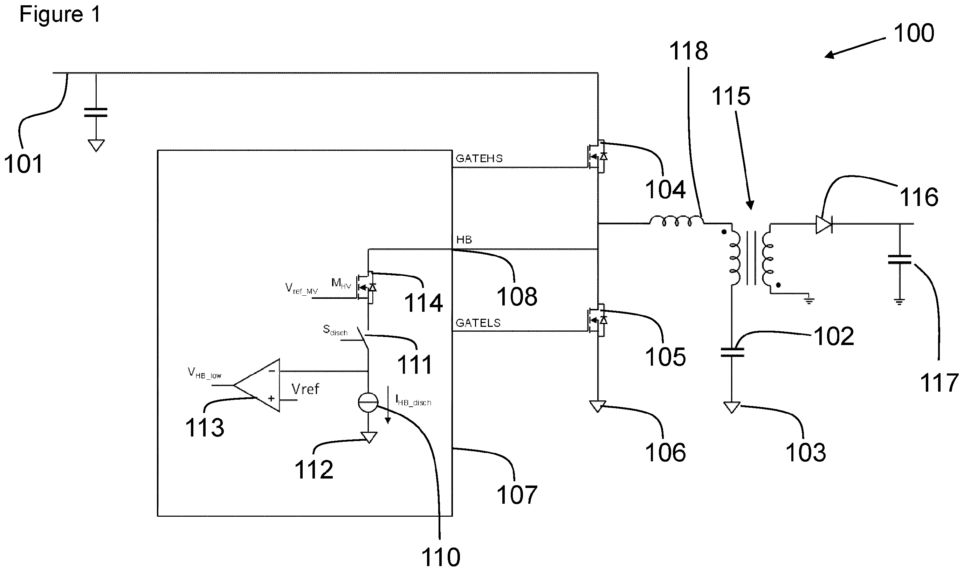

Figure 1 shows an example of a half-bridge circuit 100. The half-bridge circuit 100 comprises a power supply input node 101 couplable to a supply voltage. It will be appreciated that the power supply input node 101 will be coupled to a supply voltage in use and may also be connected to the supply voltage when not in use. However, the power supply input node 101 does not need to be permanently coupled to the supply voltage.

The half-bridge circuit 100 also comprises an energy storage component 102 configured to store a charge thereon. The charge on the energy storage device 102 may be stored thereon as a result of the configuration of the circuit 100 being set such that charge flows to a first plate or other part of the energy storage component via a first node of the energy storage component 102. The energy storage component 102 may further have a second node coupled to a second plate or other part of the energy storage component 102 wherein the second node of the energy storage component 102 is coupled to a reference node 103.

The energy storage component 102 may be a capacitor, such as a resonant capacitor (a capacitor used to resonate with an inductor to assure efficient switching for improved efficiency), a super capacitor or any other component which is configured to store a charge thereon and which can further discharge the charge therefrom.

Any reference node referred to herein may comprise a node that is couplable to a ground node set to a relative 0 volts. Any reference node may be couplable to a node set to a same relative voltage as one or more of the other reference nodes, or one or more reference nodes may be couplable to nodes set at different reference voltages, as is appropriate to enable operation of the circuit in the described manner. It will further be appreciated that, typically, reference nodes, such as a ground node, are only considered coupled to ground when the circuit is coupled to a power source. As such, references to nodes being couplable to ground are understood by the skilled person as being a clear reference that such a circuit does not need to be coupled to a power source to be a circuit according to the present disclosure but is configured to be so coupled in use.

The half-bridge circuit 100 further comprises a first switch 104. The first switch 104 is connected at a first node of the first switch 104 to the power supply node 101. A second node of the first switch 104 is coupled to each of the first node of the energy storage component 102.

The half-bridge circuit 100 further comprises a second switch 105. The second switch 105 is connected at a first node of the second switch 105 to the second node of the first switch 104. The first node of the second switch 105 is further connected to the first node of the energy storage component 102. A second node of the second switch 105 is coupled to a second reference node 106.

Each of the first switch 104 and the second switch 105 are controllable switches which can be selectively operated by a control signal. The first and second switches 104, 105 may be transistors. More specifically, the first and second switches 104, 105 may be MOSFET components such as silicon MOSFETs, silicon carbide MOSFETs or Gallium Nitride MOSFETs. It will be appreciated that other example controllable switches may also be viable alternatives without departing from the present disclosure.

It will be appreciated that where it is described that a particular component is connected to or coupled to another component of the circuit, the two components may be directly connected without intervening components or they may be connected via one or more other components. Where a first node of a particular component is described as coupled to a first node of another component, this is intended to mean that the first node of that particular component is the most directly connected node to the other component. For example, saying that the first node of a first component is connected to a first node of a second component does not mean that the first node of the first component is connected to the first node of the second component via a second node of the first component. As a whole, this phrasing has been used in order to clearly define the order in which certain components are placed in a circuit without limiting the disclosure such that no other additional components could be incorporated between the components in question.

The half-bridge circuit 100 further comprises a control circuit 107 configured to control the switching of the first switch 104 and the second switch 105. The control circuit 107 may be an integrated circuit (IC). The control circuit 107 may provide for control of the first switch 104 and the second switch 105 by providing a respective first control signal and second control signal to corresponding control nodes of the first switch 104 and the second switch 105.

The control circuit 107 is further connected at an intermediate node 108 of the control circuit 107 to each of the second node of the first switch 104, the first node of the second switch 105 and the first node of the energy storage component 102. The intermediate node 108 may be a pin of the control circuit 107, for example. In one or more embodiments, the intermediate node 108 may be a high-voltage pin of the control circuit 107.

The control circuit 107 comprises a power dissipating component 110. The power dissipating component 110 is a component through which charge from the energy storage component 102 can be safely discharged. The power dissipating component 110 may be a current limiting component which is configured to control the current which passes therethrough. In alternative embodiments, the power dissipating component 110 may be a voltage dissipating component. For example, the energy storage component 110 may be a resistor having a resistance configured to provide for safe dissipation of the charge therethrough. In other examples, the power dissipating component 110 may be a current source. In yet other examples, the power dissipating component 110 may be another resistive element which allows for controlled discharge of the charge on the energy storage component therethrough. A current source may allow for quicker discharging of the capacitor than a suitable resistor.

The control circuit 107 may further comprise a discharge switch 111 which is configured to selectively couple a first node of the power dissipating component 110 to the intermediate node 108 and wherein a second node of the power dissipating component 110 is coupled to a third reference node 112 such that the energy storage component 102 can selectively discharge charge stored thereon via the power dissipating component 110 of the control circuit 107. In one or more embodiments, the discharge switch 111 may be configured to provide for the discharging of any charge stored on the energy storage component 102 when the discharge switch 111 is closed, thereby electrically connecting the energy storage component 102 to the power dissipating component 110. The discharge switch 111 may be any suitable controllable switch. The discharge switch 111 may be controlled by the control circuit 107 such that the control circuit 107 can selectively control the discharge of the energy storage component 102.

The control circuit 107 may be configured to cause the energy storage component 102 to be discharged after a reset of the half-bridge circuit 100. Control of the discharging of the energy storage component 102 is controlled, at least in part, by way of control of the discharge switch 111. Reset of the half-bridge circuit 100 may comprise one or more of: disconnection of a load from the half-bridge circuit 100; operation of the half-bridge circuit 100 in a protection mode; and restart of the half-bridge circuit 100 after a shut-down. It will be appreciated that this is not an exhaustive list of the possible conditions under which an energy storage device 102 may need to be discharged, however, it provides examples that illustrate scenarios in which undischarged charge may otherwise be stored on the energy storage component 102. By providing for the discharging of the excess charge, potential damage to a load or the half-bridge circuit 100 itself may be avoided.

The control circuit 107 may be configured to prevent start-up of the half-bridge circuit 100 if the voltage at the energy storage component 102 is greater than the predetermined discharge voltage. In this way, the control circuit 107 is able to prevent damage from being caused to the load, the half-bridge circuit 100 itself or another component. There may be one or more additional conditions under which the control circuit 107 will prevent start-up of the half-bridge circuit 100. For example, the control circuit 107 may prevent start-up of the half-bridge circuit 100 where the temperature of the control circuit 107 is greater than a predetermined maximum operating temperature. The control circuit 107 may comprise one or more temperature sensors configured to measure the temperature of the control circuit 107 or the control circuit 107 may be configured to receive a temperature signal indicative of the temperature of the control circuit 100. The control circuit 107 may further be configured to prevent the start-up of the half-bridge circuit 100 when the input voltage is less than a predetermined minimum input voltage. A control circuit 107 configured to provide for these various protections may provide a particularly safe system and may also be resistant to shorts of one or both of the first and second switches 104, 105, as one or more of the start-up prevention conditions may be triggered in the case of a short.

The half-bridge circuit 100 may further be configured to detect when the voltage at the energy storage component is below a predetermined discharge voltage. The predetermined discharge voltage may be a voltage which, if that voltage remained on the energy storage component 102 prior to start-up of the half-bridge circuit 100, damage would not be caused to the load, the half-bridge circuit 100 itself or any other components. The control circuit 107 may be configured to detect the voltage level at the energy storage component 102 in any of a plurality of suitable ways. In one or more embodiments, the control circuit 107 may comprise a comparator 113 configured to compare a voltage at a first input node to a reference voltage at a second input node of the comparator 113 wherein the reference voltage is the predetermined discharge voltage and wherein the voltage at the first input node is indicative of the voltage at the first node of the energy storage component 102. The comparator 113 may be any suitable comparator 113 such as a MOSFET, an operational amplifier or another component which can be used to compare an input voltage to a reference voltage and provide an output signal that is dependent on the difference therebetween. The voltage at the first input terminal of the comparator 113 may not be exactly the same as the voltage of the energy storage component 102, however, it will be indicative of this voltage. For example, one or more voltage drops may occur between the energy storage component 102 and the comparator 113. In addition, there may be one or more components between the energy storage component 102 and the comparator 113 which are configured to intentionally limit the voltage travelling therebetween so that the comparator 113 and the power dissipating component 112 can operate at a reduced voltage. The output node of the comparator 113 may be a low-voltage pin of the control circuit 107 or the output node of the comparator 113 may be coupled to one or more other components within the control circuit 107.

In one or more embodiments, the control circuit 107 may comprise a voltage limiting component 114 arranged between the discharge switch 111 and the intermediate node 108. The voltage limiting component 114 may be configured to limit the voltage provided from the energy storage component 102 to both the discharge switch 111 and the power dissipating component 110 to below a maximum threshold voltage. In one or more embodiments, the voltage limiting component 114 may be configured to provide for a maximum threshold voltage that can pass therethrough such that the discharge switch 111 and power dissipating component 110 do not experience voltages above the maximum threshold voltage. This allows the components below the voltage limiting component in the circuit, as shown, to be selected to have a maximum operating voltage based on the maximum threshold voltage. This allows the maximum operating voltage of these components to be selected such that they do not exceed, or do not significantly exceed the maximum threshold voltage, thereby allowing for the selection of components that are one or both of smaller and cheaper than would be necessary if they needed to be configured to handle higher voltages. The voltage limiting component 114 may be one of an NMOS or a JFET, for example. The provision of the voltage limiting component 114 means that the total power dissipation is split between the voltage limiting component 114 and the power dissipating component 110. It will be appreciated that, for correct operation, the maximum threshold voltage will be greater than the reference voltage at the second input node of the comparator.

The half-bridge circuit 100 may further comprise a transformer 115 comprising a first node of a first winding coupled to the second node of the first switch 104; the first node of the second switch 105 and the intermediate node 108. The transformer 115 may further comprise a second node coupled to the first node of the energy storage component 102 such that the transformer 115 is arranged between the first switch 104 and the energy storage component 102. The transformer 115 may provide for stepping up or stepping down of a voltage from the between the first winding and a second winding where the first winding is located on the first side of the half-bridge circuit 100 (such as the input side) and the second winding is located on a second side of the half-bridge circuit 100 (such as the output side). The second winding of the transformer 115 may be couplable to a load on the second side of the circuit. A diode 116 may further be located between a first node of the second winding and the load wherein the diode 116 is oriented to inhibit or prevent current from flowing from the load to the second winding of the transformer 115. A smoothing capacitor 117 may be placed in parallel with the load.

The half-bridge circuit 100 may comprise an inductor 118 located between the second node of the first switch 104 and the first node of the first winding of the transformer 115. In some examples, the functionality of the inductor is achieved by designing the transformer such that the leakage inductance is part of the transformer. That is, the inductor may be integrated into the transformer design.

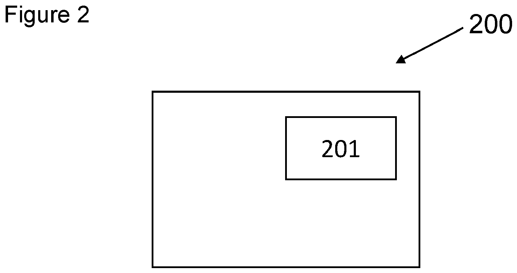

Figure 2 shows an example switch mode power supply 200 that comprises the half-bridge circuit 201 of figure 1.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A half-bridge circuit comprising:
a power supply node couplable to a supply voltage;
an energy storage component configured to store a charge thereon;
a first switch connected:
at a first node of the first switch to the power supply node; and
at a second node of the first switch to a first node of the energy storage component, wherein a second node of the energy storage
component is connected to a first reference node;
a second switch connected:
at a first node of the second switch to the second node of the first switch;
at the first node of the second switch to the first node of the energy storage component; and
at a second node of the second switch to a second reference node;
a control circuit configured to control the switching of the first switch and the second switch, wherein the control circuit is further connected at an intermediate node of the control circuit to:
the second node of the first switch;
the first node of the second switch; and
the first node of the energy storage component,
wherein the control circuit comprises:
a power dissipating component;
a discharge switch configured to selectively couple a first node of the power dissipating component to the intermediate node and wherein a second node of the power dissipating component is coupled to a third reference node such that the energy storage component can selectively discharge charge stored thereon via the power dissipating component of the control circuit and wherein the control circuit is further configured to detect when the voltage at the energy storage component is below a predetermined discharge voltage.

2. The half-bridge circuit of claim 1 wherein the control circuit is configured to cause the energy storage component to be discharged after a reset of the half-bridge circuit.

3. The half-bridge circuit of claim 2 wherein the reset of the half-bridge circuit comprises one or more of:
disconnection of a load from the half-bridge circuit;
operation of the half-bridge circuit in a protection mode;
setting an output voltage level of the half-bridge circuit to a lower voltage level;
restart of the half-bridge circuit.

4. The half-bridge circuit of any preceding wherein the power dissipating component is a current source.

5. The half-bridge circuit of any preceding claim wherein the control circuit comprises a comparator configured to compare a voltage at a first input node to a reference voltage at a second input node of the comparator wherein the reference voltage is the predetermined discharge voltage and wherein the voltage at the first input node is indicative of the voltage at the first node of the energy storage component.

6. The half-bridge circuit of any preceding claim wherein the energy storage component is a resonant capacitor.

7. The half-bridge circuit of any preceding claim further comprising a transformer comprising a first node of a first winding coupled to:
the second node of the first switch;
the first node of the second switch; and
the intermediate node,
and the transformer further comprising a second node coupled to the first node of the energy storage component such that the transformer is arranged between the first switch and the energy storage component.

8. The half-bridge circuit of claim 7 wherein a second winding of the transformer is coupled to a load.

9. The half-bridge circuit of either of claims 7 - 8 further comprising an inductor arranged between the first switch and the transformer.

10. The half-bridge circuit of any preceding claim further comprising a voltage limiting component arranged between the discharge switch and the intermediate node wherein the voltage limiting component is configured to limit the power provided from the energy storage component to both the discharge switch and the power dissipating component.

11. The half-bridge circuit of claim 10 wherein the voltage limiting component is one of a NMOS or a JFET.

12. The half-bridge circuit of any preceding claim wherein the intermediate node is coupled to the control circuit at a high-voltage pin of the control circuit.

13. The half-bridge circuit of any preceding claim wherein the control circuit is configured to prevent start-up of the half-bridge circuit if voltage at the energy storage component is greater than the predetermined discharge voltage.

14. The half-bridge circuit of any preceding claim wherein the control circuit is configured to prevent start-up of the half-bridge circuit if the voltage at the energy storage component is greater than the predetermined discharge voltage.

15. A switch mode power supply comprising the half-bridge circuit of any of claims 1 - 14.
